# FASCICULE DE BREVET EUROPEEN

(11) **EP 2 588 770 B1**
(45) Date de publication et mention de la délivrance du brevet: **31.12.2014**
(21) Numéro de dépôt: 11740963.1
(22) Date de dépôt: 29.06.2011
(51) Int. Cl.: F16C 19/54, F16F 15/023, F16C 27/04

(54) **PROCÉDÉ D'AMORTISSEMENT DYNAMIQUE D'UN ARBRE DE PUISSANCE EN PARTICULIER D'UN ARBRE SURCRITIQUE, ET ARCHITECTURE D'AMORTISSEMENT DE MISE EN OEUVRE**
VERFAHREN ZUR DYNAMISCHEN STOSSDÄMPFUNG BEI EINER ANTRIEBSWELLE , IM BESONDEREN EINE SUPERKRITISCHE WELLE, UND STOSSDÄMPFUNGSARCHITEKTUR ZUR UMSETZUNG DES VERFAHRENS
METHOD FOR DYNAMICALLY ABSORBING SHOCKS IN A POWER SHAFT, IN PARTICULAR A SUPERCRITICAL SHAFT, AND SHOCK-ABSORBING ARCHITECTURE FOR IMPLEMENTING SAID METHOD

(30) Priorité: 01.07.2010 FR 1055272
(43) Date de publication de la demande: 08.05.2013
(73) Titulaire: Turbomeca, 64510 Bordes (FR)
(72) Inventeur: CAZAUX, David, F-64420 Nousty (FR); VOTIE, Sylvain, Pierre, F-64320 Aressy (FR)
(74) Mandataire: Bringer, Mathieu
(86) Numéro de dépôt international: PCT/FR2011/051517
(87) Numéro de publication internationale: WO 2012/001304

(56) Documents cités:
- EP-A1- 1 375 941
- US-A1- 2003 190 099
- US-A1- 2006 204 153

## Description

L'invention concerne un procédé d'amortissement dynamique d'un arbre de puissance, en particulier d'un arbre surcritique, ainsi qu'une architecture d'amortissement apte à mettre en oeuvre un tel procédé.

Les arbres de rotation de puissance, en particulier dans les turbomoteurs, ont des plages de fonctionnement nominal qui peuvent dépasser leur première vitesse critique de flexion. Par définition, la plage de fonctionnement des arbres surcritiques dépasse toujours leur première vitesse critique. A la résonance, qui se produit au passage d'une vitesse critique, les arbres de puissance subissent des phénomènes de surtension qui amplifient les déformations et les efforts provoqués par les balourds de l'arbre.

Une analyse modale de l'architecture d'un arbre de puissance donné - qui présente classiquement un palier avant et un palier arrière - permet de déterminer les valeurs des vitesses critiques, la forme des déformées modales ainsi que la répartition de l'énergie de déformation entre les composants de la ligne d'arbre : les paliers avant, arrière et l'arbre reliant ces paliers.

Un exemple d'analyse modale d'un arbre surcritique donné fournit une valeur de première vitesse critique égale à 15 000 tr/min, soit 70% de sa vitesse nominale, avec une répartition d'énergie de déformation égale à 10% sur le palier avant, 30% sur le palier arrière et 60% sur l'arbre.

Afin d'amortir les contraintes amplifiées, associées en particulier à l'utilisation d'arbres surcritiques, des paliers amortisseurs à film d'huile, encore appelé « squeeze film », permettent de limiter l'amplitude de la surtension provoquée au passage de la vitesse critique.

Cependant, ces arbres peuvent présenter des dentures de puissance, ce qui est en général le cas sur les turbomoteurs à réducteur de vitesse utilisés dans le domaine aéronautique lorsque la vitesse de rotation de l'arbre de puissance est élevée. Le réducteur de vitesse permet de transformer la puissance afin d'alimenter les récepteurs (Boite de Transmission Principale d'hélicoptère, génératrice électrique etc...) Dans ce cas, l'utilisation de squeeze films sur les paliers encadrant les dentures de l'arbre de puissance est exclue. En effet, ces paliers doivent présenter suffisamment de rigidité pour limiter tout déplacement radial du pignon subissant les efforts d'engrènement, afin de transmettre le couple moteur et éviter tout désengagement ou usure prématurée. Or les squeeze films nécessitent un déplacement radial du roulement pour pouvoir être comprimés et produire leur effet d'amortisseur. L'utilisation des squeeze films est donc incompatible avec ces paliers d'encadrement de dentures.

L'énergie de déformation restant toujours importante sur le palier arrière - supérieure à 10% - et l'amortissement étant difficile à réaliser sur le palier avant du fait de la présence des dentures de puissance, les systèmes d'amortissement des architectures des moteurs à réducteur de vitesse et à arbre critique ont donc été disposés sur les paliers arrière de la ligne d'arbre.

Cependant, sur certaines architectures modernes, les paliers arrière ne participent plus à la déformée modale, aucun amortissement externe n'étant alors possible au niveau de ces paliers arrière. Ainsi, les paliers avant localisent, typiquement, près de 25% et l'arbre environ 75% de l'énergie de déformation : les paliers arrière - qui ne travaillent pas en amortissement - n'absorbent alors pratiquement pas de déformation (moins de 1 %). Les paliers du pignon menant deviennent alors la seule zone pouvant permettre d'apporter de l'amortissement externe à l'ensemble de la ligne d'arbre, un pourcentage d'énergie de déformation dans l'arbre de 75 % étant inacceptable.

L'invention propose une architecture permettant d'apporter un amortissement suffisant tout en conservant une rigidité au niveau des paliers avant afin de ne pas compromettre l'engrènement des dentures de puissance. Pour ce faire, un amortissement compressible dynamique est créé en prolongement du roulement aval de l'engrènement.

Plus précisément, l'invention a pour objet un procédé d'amortissement dynamique sur un arbre de puissance comportant un engrènement de réduction de vitesse sur un pignon menant, encadrés par un ensemble de supports d'arbre amont et aval à l'engrènement. Dans cette architecture, l'ensemble de supports est prolongé en aval par au moins un support supplémentaire couplé à un amortissement compressible en mouvement orbital pour former un amortissement aval axialement excentré par rapport au support amont au regard de l'engrènement de puissance. Cette architecture excentrée permet d'apporter un amortissement dynamique.

Selon des modes de réalisation particuliers :
- le prolongement aval est réalisé par l'intermédiaire d'une liaison souple formant un levier d'ajustement de raideur permettant d'ajuster la répartition de l'énergie de déformation dans l'arbre et l'énergie amortie qui en résulte ; ainsi, la liaison souple permet de piloter la raideur de l'amortissement aval et donc limiter l'effet de la vitesse critique par une meilleure répartition d'énergie de déformation dans l'arbre ;
- le décalage aval de l'amortissement supplémentaire est déterminé par itération de sorte à placer cet amortissement dans la déformée de l'arbre afin d'apporter un maximum d'amortissement par compression radiale; l'engrènement est ainsi encadré par deux paliers raides assurant une transmission de couple optimale.

L'invention se rapporte également à un ensemble amortisseur dynamique sur arbre de puissance de mise en oeuvre du procédé ci-dessus. Un tel ensemble comporte des paliers amont et aval à roulements de puissance encadrant un engrènement de dentures de réduction de vitesse. Le palier aval est couplé à au moins un palier à roulement supplémentaire associé à un amortisseur compressible pour former un amortisseur aval axialement excentré par rapport au palier amont au regard de l'engrènement de dentures.

Selon des modes de réalisation particuliers :
- les deux paliers avals sont liés par une cage souple montée sur un carter commun;
- l'amortisseur compressible est constitué d'un squeeze film, en particulier d'un squeeze film centré par la cage souple sur l'arbre ;
- le roulement du palier aval supplémentaire peut être un roulement à billes ou un roulement à rouleaux

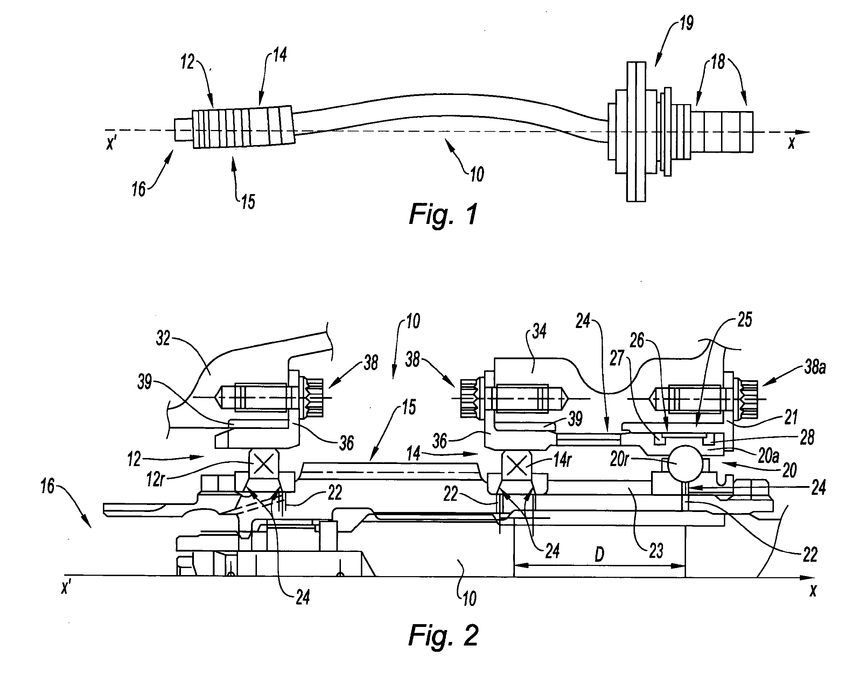

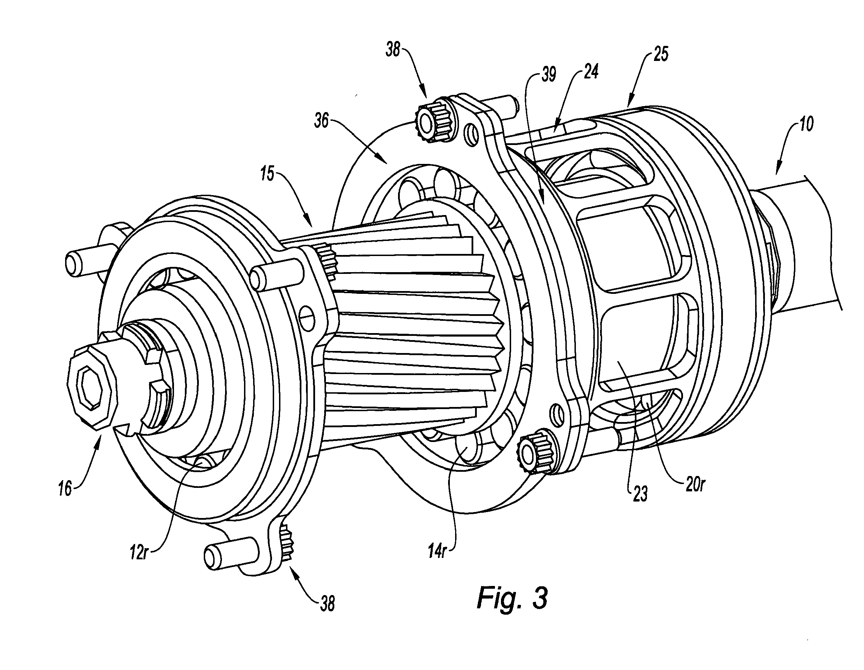

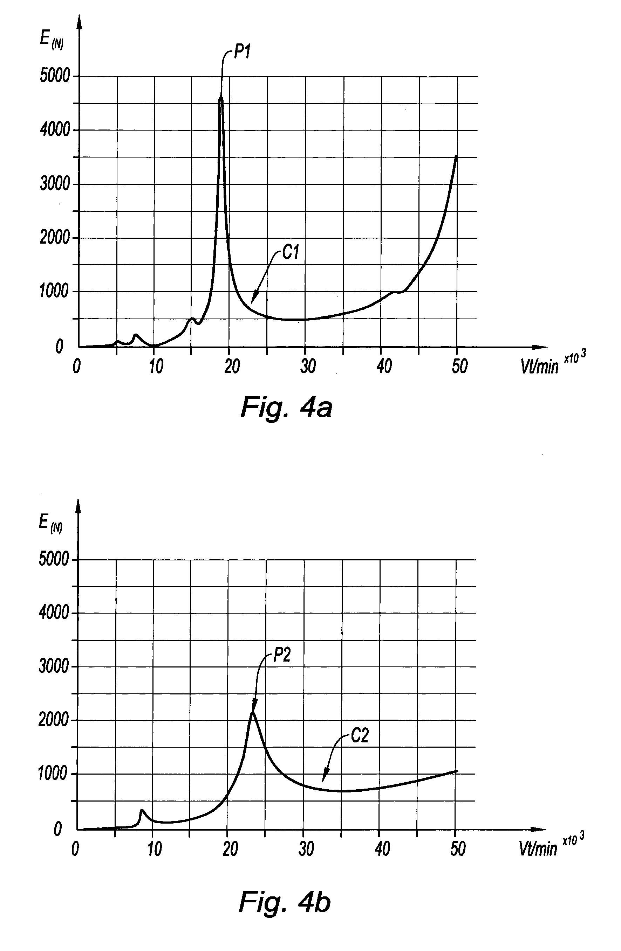

D'autres caractéristiques et avantages de la présente invention apparaîtront à la lecture de l'exemple de réalisation détaillé qui suit, en référence aux dessins annexées, qui représentent respectivement :
- en figure 1, une vue globale d'une déformée modale d'un arbre de puissance classique monté entre des paliers avant et arrière en liaison avec un pignon menant ;
- en figure 2, une demi - vue en coupe longitudinale (partielle) du pignon menant réducteur en liaison avec l'arbre de puissance de la figure 1 selon une architecture conforme à l'invention ;
- en figure 3, une vue en perspective (partielle) de l'arbre de puissance équipé d'un amortisseur dynamique selon l'invention, et
- en figures 4a et 4b, deux diagrammes d'efforts sur des roulements avant de l'arbre de puissance en fonction de la vitesse de rotation, respectivement en absence et en présence de l'amortisseur dynamique selon l'invention.

Dans la description qui suit, les termes avant ou amont se rapportent, par comparaison le long d'un axe X'X, à des positions d'éléments disposés du côté du pignon menant ou plus près du pignon, alors que les termes aval ou arrière désignent, par comparaison le long de l'axe X'X, la position d'éléments plus éloigné du pignon menant ou vers la partie de création du couple moteur. Par ailleurs, les mêmes signes de référence désignent des éléments identiques ou équivalents.

En référence à la vue globale de la figure 1, un arbre de puissance 10 d'entraînement de turbine 19 présente, en déformée modale par rapport à son axe X'X au repos, une flexion intégrant environ 75 % de l'énergie de déformation lorsque les paliers arrière 18 ne participent pratiquement pas (moins de 1%) à l'amortissement. Les paliers avant, 12 et 14, qui encadrent les dentures 15 sur lequel est monté le pignon menant 16 de réduction de vitesse, supportent alors environ 25% de l'énergie de déformation qui n'est pas amortie. Une telle répartition n'est pas acceptable, en particulier à la résonance. Les efforts subis par les roulements au niveau des paliers avant sont illustrés en figure 4a et commentés ci-après.

Une architecture conforme à l'invention, telle qu'illustrée en figures 2 (demi - vue en coupe) et 3 (vue en perspective), permet d'amortir les efforts subis par les paliers avant 12 et 14 de roulement à rouleaux durs 12r et 14r, sans nuire à l'engrènement du pignon avant. Les paliers 12 et 14 sont montés respectivement sur des carters 32 et 34 par des brides 36 à travers des ensembles vis-écrous 38 et des bagues annulaires 39.

Dans cette architecture, le palier avant 14 situé en aval par rapport au premier palier amont 12 selon l'axe orienté X'X de l'arbre 10, et un palier aval supplémentaire 20 sont montés aux extrémités du carter 34. Les paliers sont lubrifiés par des canaux 22 couplées à des gicleurs 24. La bride 36 est prolongée axialement par une cage souple 24 en acier ajouré, de type cage d'écureuil, elle-même prolongée par la cage extérieure 20a du palier 20. La cage souple 24 relie ainsi les roulements 14r et 20r, le palier 20 étant maintenu en position par la bride 36 via la cage souple 24. En option, une bride 21 (la bride 21 et le carter 34 ne sont pas représentés sur la figure 3 pour ne pas masquer la cage), fixée par un ensemble vis-écrous 38a et prolongée axialement par une languette 25, permet de protéger le carter 34. Le roulement 20r de ce palier, à billes dans cet exemple, est un roulement « en butée » - en ce sens qu'il reprend les efforts axiaux de l'ensemble de la ligne d'arbre.

Le carter 34 forme avantageusement dans sa partie centrale une cage souple 24 en acier ajouré, de type cage d'écureuil, entre les deux paliers 14 et 20. Le palier 20, qui crée un amortissement dynamique par couplage avec la cage souple 24, est ainsi excentré par rapport au palier amont 12 en prenant la section centrale des dentures de puissance 15 comme référence. La cage souple permet ainsi de piloter la raideur du palier 20 et donc d'ajuster la vitesse critique.

Afin de réaliser un amortissement dynamique du palier supplémentaire 20 monté sur la cage souple 24, le roulement 20r est combiné radialement à un squeeze film 26. Il s'agit d'un film d'huile disposé entre la bague 25 et la cage extérieure 20a du palier 20, en extension axiale selon l'axe X'X entre deux gorges d'étanchéité 27 et 28, intégrant préférentiellement des joints à segment pour piloter les débits de fuite. Alternativement, le squeeze film peut ne pas être centré sur la cage mais directement monté sur le carter 34 avec une bague extérieure de roulement « flottante » (non représentée).

Le pourcentage d'énergie de déformation amortie par le squeeze film au passage du mode d'arbre peut alors être ajusté grâce à la souplesse de la cage 24, par exemple avec un amortissement égal ou supérieur à environ 15%. Une telle architecture permet ainsi une répartition (en pourcentages) de 15 à 25 / 70 à 60 / 15, entre respectivement l'énergie amortie dans les paliers avant / l'énergie amortie dans l'arbre / l'énergie non amortie. De telles répartitions sont mécaniquement tout à fait acceptables.

De plus, le décalage « d » , qui traduit la position excentrée du palier 20 par rapport au palier 14 réalisée par une entretoise 23, est ajusté par itération pour que le palier amortisseur 20 soit dans la déformée de l'arbre. Un compromis est établi entre un décalage au plus court, pour diminuer l'encombrement et au plus long pour augmenter l'amortissement du mode. La valeur du décalage est également fonction, notamment, de la gamme de vitesses de fonctionnement, de la longueur des dentures et de l'arbre ainsi que du diamètre de l'arbre. Le décalage « d » a pour effet d'écraser au mieux le squeeze film, ce qui augmente son efficacité et permet d'apporter un maximum d'amortissement, en particulier au passage de la vitesse critique de flexion de l'arbre (encore appelé résonance). Dans l'exemple de réalisation le décalage « d » est ajusté à 40 mm.

En effet, à ce passage - correspondant à un faible passage de couple par le pignon menant - l'arbre subit un mouvement orbital par rapport à son axe X'X sous l'effet de son propre balourd (cf. figure 1). Le palier amortisseur 20 monté sur la cage souple 24 suit le même mouvement et provoque un écrasement du film d'huile 26 amplifiant ainsi l'amortissement dynamique.

Par ailleurs, la raideur des paliers encadrant les dentures de puissance 15 permet d'assurer une bonne tenue des dentures entre elles lorsque s'exerce le couple moteur, même lors des passages des déformées de l'arbre ou à pleine puissance.

Les diagrammes des figures 4a et 4b illustrent les efforts exercés en newtons E(N) sur un ensemble de roulements des paliers avant d'un arbre de puissance en fonction de la vitesse de rotation V en tours par minute (t/min), respectivement en absence et en présence de l'amortisseur dynamique selon l'invention.

La première courbe C1 (figure 4a) présente en particulier un pic fort important de résonance P1 d'environ 4500 N, lors du passage modal de l'arbre à la vitesse critique de 19 000 t/min. Les efforts subis peuvent générer des usures prématurées ou des désengagements entre les dentures.

La seconde courbe C2 (figure 4b) ne présente plus de pic d'effort important au passage de l'arbre à la vitesse critique de 24 000 t/min grâce à l'amortissement dynamique réalisée par une architecture du type décrite ci-dessus. Le pic enregistré P2 ne s'élève qu'à environ 1600 N, ce qui reste tout à fait acceptable.

L'invention n'est pas limitée aux exemples de réalisation décrits et représentés. Il est par exemple possible de prévoir d'autres types d'amortissement compressible que le squeeze film : joint élastomère, air comprimé, palier magnétique, etc. Par ailleurs la liaison souple peut être réalisée par une alternance de différents matériaux, un alliage souple ou des tresses de fils métalliques. En outre, plusieurs paliers supplémentaires peuvent être prévus selon une répartition ajustée afin de produire un amortissement avant réglé avec précision.

## Revendications

1. Procédé d'amortissement dynamique sur un arbre de puissance (10) comportant un engrènement (15) de réduction de vitesse sur un pignon menant (16), encadré par un ensemble de supports d'arbre amont (12) et aval (14) à l'engrènement, **caractérisé en ce que** l'ensemble de supports (12, 14) est prolongé en aval par au moins un support supplémentaire (20) couplé à un amortissement compressible (26) en mouvement orbital pour former un amortissement aval axialement excentré (20, 26) par rapport au support amont (12) au regard de l'engrènement de puissance (15).

2. Procédé d'amortissement dynamique selon la revendication 1, dans lequel le prolongement aval est réalisé par l'intermédiaire d'une liaison souple (24) formant un levier d'ajustement de raideur permettant d'ajuster la répartition de l'énergie de déformation dans l'arbre (10) et l'énergie amortie qui en résulte.

3. Procédé d'amortissement dynamique selon la revendication 1 ou 2, dans lequel le décalage aval (D) de l'amortissement supplémentaire (20) est déterminé par itération de sorte à placer cet amortissement dans la déformée de l'arbre (10) afin d'apporter un maximum d'amortissement par compression radiale.

4. Ensemble amortisseur dynamique sur arbre de puissance de mise en oeuvre du procédé selon la revendication 1, **caractérisé en ce qu'**il comporte des paliers amont (12) et aval (14) à roulements de puissance (12r, 14r) encadrant un engrènement de dentures de réduction de vitesse (15), le palier aval (14) étant couplé à au moins un palier à roulement supplémentaire (20, 20r) associé à un amortisseur compressible (26) pour former un amortisseur aval axialement excentré (20, 26) par rapport au palier amont (12) au regard de l'engrènement de dentures (15).

5. Ensemble amortisseur dynamique selon la revendication précédente, dans lequel les deux paliers avals (14, 20) sont liés par une cage souple (24) montée sur un carter commun (34).

6. Ensemble amortisseur dynamique selon la revendication 4 ou 5, dans lequel l'amortisseur compressible est constitué d'un « squeeze film » (26).

7. Ensemble amortisseur dynamique selon la revendication précédente, dans lequel le « squeeze film » (26) est centré sur l'arbre (10) par la cage souple (24).

8. Ensemble amortisseur dynamique selon l'une quelconque des revendications 4 à 7, dans lequel le roulement (20r) de palier aval supplémentaire (20) est un roulement à billes.

9. Ensemble amortisseur dynamique selon l'une quelconque des revendications 4 à 7, dans lequel le roulement (20r) du palier aval supplémentaire (20) est un roulement à rouleaux.

10. Ensemble amortisseur dynamique selon l'une quelconque des revendications 4 à 9, **caractérisé en ce qu'**il s'applique sur un arbre surcritique.

## Patentansprüche

1. Verfahren zur dynamischen Dämpfung an einer Leistungswelle (10), die einen Eingriff (15) zur Geschwindigkeitsverringerung an einem Antriebsritzel (16) aufweist, der durch eine Anordnung von zu dem Eingriff stromaufwärtigen (12) und stromabwärtigen (14) Wellenträgern eingerahmt wird, **dadurch gekennzeichnet, dass** die Anordnung von Trägern (12, 14) stromabwärts durch mindestens einen weiteren Träger (20) verlängert wird, der an eine komprimierbare Dämpfung (26) in kreisender Bewegung gekoppelt ist, um eine relativ zu dem stromaufwärtigen Träger (12) axial exzentrische stromabwärtige Dämpfung (20, 26) gegenüber dem Leistungseingriff (15) zu bilden.

2. Verfahren zur dynamischen Dämpfung nach Anspruch 1, wobei die stromabwärtige Verlängerung mit Hilfe einer biegsamen Verbindung (24) realisiert ist, die einen Hebel zur Steifigkeitsanpassung für die Anpassung der Verteilung der Verformungsenergie in der Welle (10) und der daraus resultierenden gedämpften Energie bildet.

3. Verfahren zur dynamischen Dämpfung nach Anspruch 1 oder 2, wobei der stromabwärtige Versatz (D) der weiteren Dämpfung (20) iterativ bestimmt wird, derart, dass er diese Dämpfung in der Verformung der Welle (10) platziert, um eine maximale Dämpfung durch radiale Kompression zu bewirken.

4. Dynamische Dämpfungsanordnung an einer Leistungswelle zur Durchführung des Verfahrens nach Anspruch 1, **dadurch gekennzeichnet, dass** sie stromaufwärtige (12) und stromabwärtige (14) Lager mit Leistungswalzen (12r, 14r) aufweist, die einen Zahneingriff zur Geschwindigkeitsverringerung (15) einrahmen, wobei das stromabfwärtige Lager (14) an mindestens ein weiteres Wälzlager (20, 20r) gekoppelt ist, das einem komprimierbaren Dämpfer (26) zugeordnet ist, um eine relativ zu dem stromaufwärtigen Lager (12) axial exzentrische stromabwärtige Dämpfung (20, 26) gegenüber dem Zahneingriff (15) zu bilden.

5. Dynamische Dämpfungsanordnung nach dem vorhergehenden Anspruch, wobei die zwei stromabwärtigen Lager (14, 20) durch einen biegsamen Käfig (24) verbunden sind, der an einem gemeinsamen Gehäuse (34) montiert ist.

6. Dynamische Dämpfungsanordnung nach Anspruch 4 oder 5, wobei der komprimierbare Dämpfer von einem "Squeeze-Film" (26) gebildet ist.

7. Dynamische Dämpfungsanordnung nach dem vorhergehenden Anspruch, wobei der "Squeeze-Film" (26) an der Welle (10) durch den biegsamen Käfig (24) zentriert wird.

8. Dynamische Dämpfungsanordnung nach einem der Ansprüche 4 bis 7, wobei das weitere Wälzlager (20r) des stromabwärtigen Lagers (20) ein Kugellager ist.

9. Dynamische Dämpfungsanordnung nach einem der Ansprüche 4 bis 7, wobei das weitere Wälzlager (20r) des stromabwärtigen Lagers (20) ein Rollenlager ist.

10. Dynamische Dämpfungsanordnung nach einem der Ansprüche 4 bis 9, **dadurch gekennzeichnet, dass** sie auf eine überkritische Welle angewendet wird.

## Claims

1. Method for dynamically absorbing shocks in a power shaft (10) comprising a speed-reducing meshing (15) at a drive pinion (16), flanked by a set of upstream (12) and downstream (14) shaft supports with respect to the meshing, wherein the set of supports (12, 14) extends downstream with at least one additional support (20) coupled with a compressible shock absorber (26) moving orbitally in order to form a downstream shock absorber that is axially offset (20, 26) with regard to the upstream support (12) opposite the power meshing (15-.

2. Method for dynamically absorbing shocks according to claim 1, in which the downstream extension is achieved by ways of a flexible link (24) forming a stiffness-adjustment lever making it possible to adjust the distribution of the strain energy in the shaft (10) and the absorbed energy which results from it.

3. Method for dynamically absorbing shocks according to claim 1 or 2, in which the downstream offset (D) of the additional shock absorber (20) is calculated iteratively so as to place this shock absorber in the deformation of the shaft (10) in order to provide maximum shock absorption by radial compression.

4. Assembly for dynamically absorbing shocks in a power shaft and implementing the method according to claim 1, wherein it comprises upstream (12) and downstream (14) bearings, with power rollers (12r, 14r), flanking a speed-reducing teeth meshing (15), a downstream bearing (14) being coupled with at least one additional bearing (20, 20r) with rolling elements associated with a compressible shock absorber (26) to form a downstream shock absorber that is axially offset (20, 26) with regard to the upstream bearing (12) opposite the tooth system meshing (15).

5. Assembly for dynamically absorbing shocks according to the preceding claim, in which the two downstream bearings (14, 20) are linked by ways of a flexible frame (24) mounted on a common casing (34).

6. Assembly for dynamically absorbing shocks according to claim 4 or 5, in which the compressible shock absorber consists of a "squeeze film" (26).

7. Assembly for dynamically absorbing shocks according to the preceding claim, in which the "squeeze film" (26) is centred on the shaft (10) by means of the flexible frame (24).

8. Assembly for dynamically absorbing shocks according to any one of claims 4 to 7, in which the rolling-element system (20r) of the additional downstream bearing (20) is a ball bearing.

9. Assembly for dynamically absorbing shocks according to any one of claims 4 to 7, in which the rolling-element system (20r) of the additional downstream bearing (20) is a roller bearing.

10. Assembly for dynamically absorbing shocks according to any one of claims 4 to 9, wherein it applies to a supercritical shaft.
